# EUROPEAN PATENT APPLICATION

(11) **EP 4 653 152 A1**
(43) Date of publication of application: **26.11.2025**
(21) Application number: 25176360.3
(22) Date of filing: 14.05.2025
(51) Int. Cl.: B25J 15/00, B65H 99/00, B26D 7/32, B65G 49/06

(54) **A CARRYING DEVICE FOR CARRYING A STACK OF PRODUCTS**

(30) Priority: 20.05.2024 SE 2450544
(71) Applicant: Tecnau AB, 341 32 Ljungby (SE)
(72) Inventor: Sköneskog, Torbjörn, 341 39 Ljungby (SE); Nordström, Tom, 302 39 Halmstad (SE)
(74) Representative: Valea AB

(57) **Abstract**

The present disclosure relates to a carrying device (28) for carrying a stack of products (12), in particular a stack of sheets, such as a stack of sheets of paper. The carrying device (28) extends in a longitudinal direction (L), a transversal direction (T) and a vertical direction (V), the directions being mutually perpendicular. The carrying device (28) is adapted to assume a carrying configuration in which the carrying device (28) is adapted to carry the stack of products (12).

The carrying device (28) comprises a first carrying assembly (38), a second carrying assembly (40) and a carrying device base (42), each one of the first carrying assembly (38) and a second carrying assembly (40) being connected to the carrying device base (42),

Each one of first carrying assembly (38) and the second carrying assembly (40) is in accordance with the following: the carrying assembly comprises a delimitation assembly (44) and a supporting surface assembly (46) connected to the delimitation assembly (44), the supporting surface assembly (46) comprising at least one supporting surface (48, 50, 52, 54), wherein the vertical direction (V) extends from the supporting surface assembly (46) to the carrying device base (42) when the carrying device (28) assumes the carrying configuration.

## Description

### TECHNICAL FIELD

The present disclosure relates to a carrying device for carrying a stack of products, in particular a stack of sheets, such as a stack of sheets of paper. Moreover, the present disclosure relates to a handling system for handling a stack of products.

### BACKGROUND

In a contemporary production line for handling a stack of products, in particular a stack of sheets, such as a stack of sheets of paper, the production line may contain components for producing the stack of products and delivering the stack of products to a picking station. The stack of products can thereafter be picked at the picking station by a carrying device and transported to a depositing region for storage or further processing of the stack.

An example of a carrying device is disclosed in US 2020/0354167 A1 in which the carrying device is referred to as a gripping unit. However, there is still a need for improvement of carrying devices for carrying a stack of products.

### SUMMARY

In view of the above, an object of a first aspect of the present disclosure is to provide a carrying device for carrying a stack of products which carrying device is associated with an appropriate control of the stack of products during use.

The above object is obtained by a first aspect of the present disclosure in accordance with claim 1.

As such, the present disclosure relates to a carrying device for carrying a stack of products, in particular a stack of sheets, such as a stack of sheets of paper. The carrying device extends in a longitudinal direction, a transversal direction and a vertical direction, the directions being mutually perpendicular. The carrying device is adapted to assume a carrying configuration in which the carrying device is adapted to carry the stack of products.

The carrying device comprises a first carrying assembly, a second carrying assembly and a carrying device base, each one of the first carrying assembly and the second carrying assembly being connected to the carrying device base.

Each one of first carrying assembly and the second carrying assembly is in accordance with the following:
The carrying assembly comprises a delimitation assembly and a supporting surface assembly connected to the delimitation assembly. The supporting surface assembly comprises at least one supporting surface, wherein the vertical direction extends from the supporting surface assembly to the carrying device base when the carrying device assumes the carrying configuration wherein, when the carrying device assumes the carrying configuration and the carrying device carries the stack of products, the delimitation assembly of the first carrying assembly and the delimitation assembly of the second carrying assembly are adapted to be located on opposite sides of the stack of products in the transversal direction.

Each supporting surface of the supporting surface assembly is adapted to contact and support the stack of products such that the stack of products is located between the supporting surface and at least a portion of the carrying device base, in the vertical direction, when the carrying device assumes the carrying configuration and the carrying device carries the stack of products.

The supporting surface assembly extends in the longitudinal direction and comprises a longitudinal supporting surface assembly centre portion, a longitudinal supporting surface assembly first end portion and a longitudinal supporting surface assembly second end portion.

The longitudinal supporting surface assembly first end portion and the longitudinal supporting surface assembly second end portion are located on opposite sides of the longitudinal supporting surface assembly centre portion in the longitudinal direction.

The carrying device is such that when the carrying device assumes the carrying configuration:
- the longitudinal supporting surface assembly centre portion is located at a longitudinal supporting surface assembly centre portion distance from the carrying device base in the vertical direction;
- the longitudinal supporting surface assembly first end portion is located at a longitudinal supporting surface assembly first end portion distance from the carrying device base in the vertical direction, and
- the longitudinal supporting surface assembly second end portion is located at a longitudinal supporting surface assembly second end portion distance from the carrying device base in the vertical direction.

According to the first aspect of the present disclosure, the longitudinal supporting surface assembly centre portion distance is either greater than or smaller than each one of the longitudinal supporting surface assembly first end portion distance and the longitudinal supporting surface assembly second end portion distance.

A carrying device according to the first aspect of the present disclosure implies that the longitudinal supporting surface assembly centre portion of the supporting surface assembly is lowered or elevated relative to each one of the longitudinal supporting surface assembly first end portion and the longitudinal supporting surface assembly second end portion of the supporting surface assembly.

Moreover, a carrying device according to the first aspect of the present disclosure implies that when the carrying device assumes the carrying configuration, a stack of products supported by the supporting surface assembly of each one of the first carrying assembly and the second carrying assembly will tend to assume a shape that is bent around a bending axis forming an angle with a reference axis extending in the longitudinal direction. Preferably, the bending axis extends in the transversal direction. Purely by way of example, when the longitudinal supporting surface assembly centre portion distance is greater than each one of the longitudinal supporting surface assembly first end portion distance and the longitudinal supporting surface assembly second end portion distance, the stack of products may be bent so as to assume a u-shape. Moreover, as another non-limiting example, when the longitudinal supporting surface assembly centre portion distance is smaller than each one of the longitudinal supporting surface assembly first end portion distance and the longitudinal supporting surface assembly second end portion distance, the stack of products may be bent so as to assume an inverted u-shape.

A bent shape according to any one of the above examples in turn implies that the stack of products is less prone to be bent around a second bending axis extending in the longitudinal direction as compared to a stack of products supported by supporting surface assemblies that are planar. As such, the stack of products is less prone to collapse around the above-mentioned second bending axis when carried by the carrying device as compared to a stack of products supported by supporting surface assemblies that are planar.

Thus, the bending around the bending axis implies that the stack of products will assume an appropriately high shape stability when carried by the carrying device of the first aspect of the present disclosure.

As a non-limiting example, the above-mentioned shape stability in turn implies that the carrying device may carry the stack of products without the need for applying a pressure onto the top of the stack of products, e.g. by using one or more elements for holding down the stack of products. Since such one or more elements may impair the quality of at least the uppermost product in the stack of products, the carrying device of the first aspect of the present disclosure implies that the carrying device can carry the stack of products with an appropriately low risk of damaging the stack of products.

Optionally, the longitudinal supporting surface assembly first end portion is located at a supporting surface assembly longitudinal distance, in the longitudinal direction, from the longitudinal supporting surface assembly second end portion. A supporting surface assembly vertical distance associated with the supporting surface assembly is the smallest absolute value difference of a first difference between the longitudinal supporting surface assembly first end portion distance and the longitudinal supporting surface assembly centre portion distance and a second difference between the longitudinal supporting surface assembly second end portion distance and the longitudinal supporting surface assembly centre portion distance. A ratio between the supporting surface assembly vertical distance and the supporting surface assembly longitudinal distance may be at least 1%, preferably at least 2%, more preferred at least 3%.

A ratio in accordance with any one of the above examples implies an appropriate bending of the stack of products.

Optionally, the supporting surface assembly vertical distance is at least 2 mm, preferably at least 3 mm.

A vertical distance in accordance with any one of the above examples implies an appropriate bending of the stack of products.

Optionally, a supporting surface assembly vertical distance associated with the supporting surface assembly is the smallest absolute value difference of a first difference between the longitudinal supporting surface assembly first end portion distance and the longitudinal supporting surface assembly centre portion distance and a second difference between the longitudinal supporting surface assembly second end portion distance and the longitudinal supporting surface assembly centre portion distance. The supporting surface assembly vertical distance may be at least 2 mm, preferably at least 3 mm.

As such, the supporting surface assembly vertical distance in accordance with any one of the above examples need not necessarily be linked to the ratio between the supporting surface assembly vertical distance and the supporting surface assembly longitudinal distance.

Optionally, the carrying assembly comprises a set of supporting teeth, each tooth of the set of supporting teeth comprising a supporting surface forming part of the supporting surface assembly.

The set of supporting teeth implies that the supporting surface assembly can be implemented in a straightforward manner.

Optionally, the set of supporting teeth comprises three or more teeth.

Optionally, the carrying device is adapted to assume a picking configuration in which the carrying device is adapted to pick the stack of products. A smallest distance in the transversal direction between a portion of the supporting surface assembly of the first carrying assembly and a portion of the supporting surface assembly of the second carrying assembly is a picking transversal distance.

When the carrying device assumes the carrying configuration, a smallest distance in the transversal direction between the portion of the supporting surface assembly of the first carrying assembly and the portion of the supporting surface assembly of the second carrying assembly is a carrying transversal distance. The carrying transversal distance is smaller than the picking transversal distance.

The carrying device being adapted to assume the picking configuration as well as the carrying configuration implies that the carrying device can pick and carry, respectively, the stack of products.

Optionally, a difference between the picking transversal distance and the carrying transversal distance is at least 5 mm.

A difference in accordance with the above implies that the carrying device can pick and carry the stack of products in an appropriate manner, e.g. with an appropriately low risk of the supporting surface assembly of the first carrying assembly and the portion of the supporting surface assembly, respectively, touching the stack of products when the carrying device assumes the picking configuration.

Optionally, the supporting surface assembly is displaceable, preferably linearly displaceable, in the transversal direction relative to the delimitation assembly in order to obtain the carrying configuration and the picking configuration, respectively.

The above implies an appropriate implementation for achieving the picking configuration and the carrying configuration, respectively. For instance, the above implies that that the picking configuration and the carrying configuration, respectively, may be achieved without requiring significant space in the vertical direction around the supporting surface assemblies.

Optionally, the supporting surface assembly is pivotable around a pivot axis, extending in the longitudinal direction, relative to the delimitation assembly, in order to obtain the carrying configuration and the picking configuration, respectively.

The above implies an appropriate implementation for achieving the picking configuration and the carrying configuration, respectively. For instance, the above implies that that the picking configuration and the carrying configuration, respectively, may be achieved without requiring significant space in the transversal direction around the supporting surface assemblies.

Optionally, the supporting surface assembly comprises a supporting surface assembly shaft assembly comprising at least one supporting surface assembly shaft. The delimitation assembly comprises a guide groove adapted to guide each supporting surface assembly shaft of the supporting surface assembly shaft assembly. The supporting surface assembly shaft assembly and the guide groove are such that when the supporting surface assembly shaft assembly is displaced relative to the guide groove, the supporting surface assembly can be displaced in the transversal direction and also pivoted around a pivot axis, extending in the longitudinal direction, relative to the delimitation assembly.

The above implies a compact implementation for achieving the picking configuration and the carrying configuration, respectively.

Optionally, the delimitation assembly is displaceable, preferably linearly displaceable, in the transversal direction relative to the carrying device base in order to obtain the carrying configuration and the picking configuration, respectively.

The above implies an appropriate implementation for achieving the picking configuration and the carrying configuration, respectively. For example, the above implies that a relatively large space may be obtained between the stack of products and the delimitation assembly when the carrying device assumes the picking configuration. Additionally, the above implies that that the picking configuration and the carrying configuration, respectively, may be achieved even for implementations of the first carrying assembly and the second carrying assembly, respectively, in which the corresponding delimitation assembly and a supporting surface are not moveable relative to each other. Moreover, the above implies that the carrying device may easily be adapted to carry stacks of products wherein the stacks have different widths, i.e. different extension in the transversal direction.

Optionally, the delimitation assembly is pivotable around a pivot axis, extending in the longitudinal direction, relative to the carrying device base in order to obtain the carrying configuration and the picking configuration, respectively.

The above implies an appropriate implementation for achieving the picking configuration and the carrying configuration, respectively. For example, the above implies that a relatively large space may be obtained between the stack of products and the delimitation assembly when the carrying device assumes the picking configuration. Additionally, the above implies that that the picking configuration and the carrying configuration, respectively, may be achieved even for implementations of the first carrying assembly and the second carrying assembly, respectively, in which the corresponding delimitation assembly and a supporting surface are not moveable relative to each other.

A second aspect of the present disclosure relates to a transferring device for transferring a stack of products, in particular a stack of sheets, such as a stack of sheets of paper, from a first position to a second position. The transferring device comprises a carrying device according to the first aspect of the present disclosure and a carrying device mover adapted to move the carrying device. Preferably, the carrying device mover is adapted to move the carrying device in each one of the longitudinal direction, the transversal direction and the vertical direction.

The transferring device in accordance with the second aspect of the present disclosure implies that the stack of products may be transferred in a straightforward manner.

Optionally, the carrying device mover comprises, or is constituted by, a robot. Preferably, the robot comprises a robotic arm comprising a robotic arm end, the carrying device being disposed on the robotic arm end.

A robot implies a space and/or cost efficient implementation of the carrying device mover.

A third aspect of the present disclosure relates to a handling system for handling a stack of products, in particular a stack of sheets, such as a stack of sheets of paper. The handling system comprises a picking station and a carrying device according to the first aspect of the present disclosure or a transferring device according to the second aspect of the present disclosure. The carrying device is adapted to carry a stack of products from the picking station.

Optionally, the picking station comprises a picking station supporting surface assembly, comprising at least one picking station supporting surface, adapted to support the stack of products and from which the carrying device is adapted to pick the stack of products. The picking station extends in a picking station longitudinal direction, a picking station transversal direction and a picking station vertical direction. The picking station directions are mutually perpendicular.

When the carrying device assumes the picking configuration for picking the stack of products from the picking station supporting surface assembly, the picking station longitudinal direction is parallel to the longitudinal direction of the carrying device. As seen in the picking station longitudinal direction, the picking station supporting surface assembly comprises a picking station supporting surface assembly centre portion, a picking station supporting surface assembly first end portion and a picking station supporting surface assembly second end portion. The picking station supporting surface assembly first end portion and the picking station supporting surface assembly second end portion are located on opposite sides of the picking station supporting surface assembly centre portion in the picking station longitudinal direction. In the picking station vertical direction, the picking station supporting surface assembly centre portion has a picking station supporting surface assembly centre portion elevation. The picking station supporting surface assembly first end portion has a picking station supporting surface assembly first end portion elevation, and the picking station supporting surface assembly second end portion has a picking station supporting surface assembly second end portion elevation. The picking station supporting surface assembly centre portion elevation is either smaller than or greater than each one of the picking station supporting surface assembly first end portion elevation and the picking station supporting surface assembly second end portion elevation.

A picking station according to the above implies that the picking station supporting surface assembly centre portion of the picking station supporting surface assembly is lowered or elevated relative to each one of picking station supporting surface assembly first end portion and the picking station supporting surface assembly second end portion.

Moreover, a picking station according to the above implies that a stack of products supported by picking station supporting surface assembly will assume a picking shape that is bent around a bending axis forming an angle with a reference axis extending in the picking station longitudinal direction. Preferably, the bending axis extends in the picking station transversal direction.

A bent picking shape according to any one of the above examples in turn implies that the stack of products assumes a shape that can be picked up by the carrying device in a straightforward way. As such, the stack of products may assume a suitable shape before the carrying device starts to carry the stack of products.

Optionally, the picking station supporting surface assembly first end portion is located at a picking station longitudinal distance, in the picking station longitudinal direction, from the picking station supporting surface assembly second end portion. A picking station supporting surface assembly vertical distance associated with the picking supporting surface is the smallest absolute value difference between a first picking station difference between the picking station supporting surface assembly centre portion elevation and the picking station supporting surface assembly first end portion elevation and a second picking station difference between the picking station supporting surface assembly centre portion elevation and the picking station supporting surface assembly second end portion elevation. A ratio between the picking station supporting surface assembly vertical distance and the picking supporting surface assembly longitudinal distance is at least 1%, preferably at least 2%, more preferred at least 3%.

A ratio in accordance with any one of the above examples implies an appropriate bending of the stack of products before being carried by the carrying device.

Optionally, the picking station supporting surface assembly vertical distance is at least 2 mm, preferably at least 3 mm.

Optionally, a picking station supporting surface assembly vertical distance associated with the picking supporting surface is the smallest absolute value difference between a first picking station difference between the picking station supporting surface assembly centre portion elevation and the picking station supporting surface assembly first end portion elevation and a second picking station difference between the picking station supporting surface assembly centre portion elevation and the picking station supporting surface assembly second end portion elevation. The picking station supporting surface assembly vertical distance may be at least 2 mm, preferably at least 3 mm.

As such, the picking station supporting surface assembly vertical distance in accordance with any one of the above examples need not necessarily be linked to the ratio between the picking station supporting surface assembly vertical distance and the picking supporting surface assembly longitudinal distance.

A picking station supporting surface assembly vertical distance in accordance with any one of the above examples implies an appropriate bending of the stack of products before being carried by the carrying device.

Optionally, the carrying device is such that the longitudinal supporting surface assembly centre portion distance is smaller than each one of the longitudinal supporting surface assembly first end portion distance and the longitudinal supporting surface assembly second end portion distance and the picking station is such that the picking station supporting surface assembly centre portion elevation is greater than each one of the picking station supporting surface assembly first end portion elevation and the picking station supporting surface assembly second end portion elevation.

The above configuration implies that the supporting surface assembly and the picking station supporting surface assembly may have complementary shapes.

Optionally, the carrying device is such that the longitudinal supporting surface assembly centre portion distance is greater than each one of the longitudinal supporting surface assembly first end portion distance and the longitudinal supporting surface assembly second end portion distance and the picking station is such that the picking station supporting surface assembly centre portion elevation is smaller than each one of the picking station supporting surface assembly first end portion elevation and the picking station supporting surface assembly second end portion elevation.

Again, the above configuration implies that the supporting surface assembly and the picking station supporting surface assembly may have complementary shapes.

A fourth aspect of the present disclosure relates to a use of a carrying device according to the first aspect of the present disclosure for carrying a stack of products, in particular a stack of sheets, such as a stack of sheets of paper.

A fifth aspect of the present disclosure relates to a use of a transferring device according to the second aspect of the present disclosure for transferring a stack of products, in particular a stack of sheets, such as a stack of sheets of paper, from a first position to a second position.

A sixth aspect of the present disclosure relates to a use of a handling system according to the third aspect of the present disclosure for handling a stack of products, in particular a stack of sheets, such as a stack of sheets of paper.

### BRIEF DESCRIPTION OF THE DRAWINGS

With reference to the appended drawings, below follows a more detailed description of embodiments of the disclosure cited as examples.

In the drawings:
- Fig. 1: is a schematic illustration of a production line;
- Fig. 2: is a schematic perspective view of an embodiment of a carrying device according to the first aspect of the present disclosure;
- Fig. 3: is a schematic perspective view of a portion of an embodiment of a carrying device according to the first aspect of the present disclosure;
- Fig. 4: is a schematic side view of a portion of an embodiment of a carrying device according to the first aspect of the present disclosure;
- Fig. 5: is a schematic front view of a portion of a carrying device not in accordance with the first aspect of the present disclosure;
- Fig. 6: is a schematic side view of a portion of an embodiment of a carrying device according to the first aspect of the present disclosure;
- Fig. 7: is a schematic side view of a portion of an embodiment of a carrying device according to the first aspect of the present disclosure;
- Fig. 8: is a schematic front view of a portion of an embodiment of a carrying device according to the first aspect of the present disclosure;
- Fig. 9: is a schematic front view of a portion of an embodiment of a carrying device according to the first aspect of the present disclosure;
- Fig. 10: is a schematic front view of a portion of an embodiment of a carrying device according to the first aspect of the present disclosure;
- Fig. 11: is a schematic front view of a portion of an embodiment of a carrying device according to the first aspect of the present disclosure;
- Fig. 12: is a schematic front view of a portion of an embodiment of a carrying device according to the first aspect of the present disclosure;
- Figs. 13a - 13c: present a schematic perspective view and a front view, respectively, of a portion of an embodiment of a carrying device according to the first aspect of the present disclosure, and
- Fig. 14: is a schematic side view of an embodiment of a handling system according to the third aspect of the present disclosure.

### DETAILED DESCRIPTION OF PREFERRED EMBODIMENTS

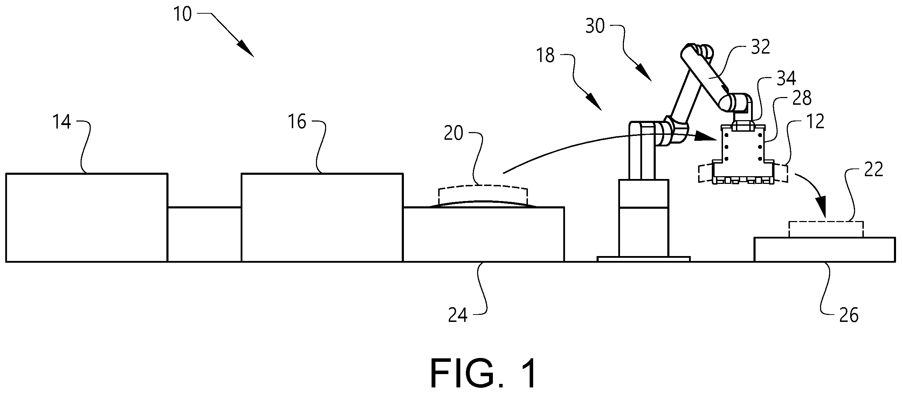

FIG. 1 is a schematic side view of a production line 10 for handling a stack of products 12. Purely by way of example, the stack of products 12 may comprise, or be constituted by, a stack of sheets, such as a stack of sheets of paper. As such, the production line may comprise a plurality of stations, such as a printing station 14 and a folding station 16.

Moreover, as indicated in Fig. 1, the production line 10 may comprise a transferring device 18 for transferring the stack of products 12 from a first position 20 to a second position 22. In Fig. 1, each one of the first position 20 and the second position 22 is indicated by dashed lines.

Purely by way of example, the first position 20 may be a position at a picking station 24 of the production line 10. Moreover, by way of example only, the second position 22 may be a position at a storage station 26. As a non-limiting example, the storage station 26 may comprise, or be constituted by, a pallet.

As indicated by way of example in Fig. 1, the transferring device 18 may comprise a carrying device 28 and a carrying device mover 30 adapted to move the carrying device 28. Moreover, as indicated by way of example only in Fig. 1, the carrying device mover 30 may comprise, or be constituted by, a robot. To this end, as indicated in Fig. 1 as a non-limiting example, the robot 30 may comprise a robotic arm 32 comprising a robotic arm end 34. The carrying device 28 may be disposed on the robotic arm end 34.

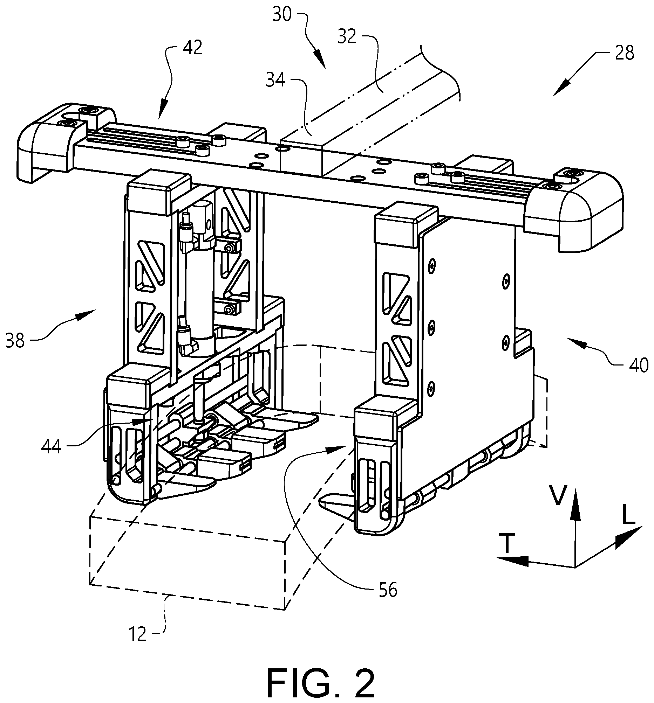

Fig. 2 illustrates an example embodiment of a carrying device 28. The carrying device 28 is suitable for carrying a stack of products 12, in particular a stack of sheets, such as a stack of sheets of paper. The carrying device 28 extends in a longitudinal direction L, a transversal direction T and a vertical direction V. The directions L,T,V are mutually perpendicular. The carrying device 28 is adapted to assume a carrying configuration in which the carrying device 28 is adapted to carry the stack of products 12. Fig. 2 illustrates the carrying device 28 in such as carrying configuration.

Fig. 2 also illustrates that a carrying device mover 30 may be connected to the carrying device 28. Purely by way of example, and as indicated in Fig. 2, a robotic arm end 34 of a robotic arm 32 of a robot 30, being an implementation of the carrying device mover 30, may be connected to the carrying device 28. Irrespective of the implementation of the carrying device mover 30, the carrying device mover 30 may be adapted to move the carrying device 28 in each one of the longitudinal direction L; the transversal direction T and the vertical direction V.

As indicated in Fig. 2, the carrying device 28 comprises a first carrying assembly 38, a second carrying assembly 40 and a carrying device base 42. Each one of the first carrying assembly 38 and a second carrying assembly 40 is connected to the carrying device base 42.

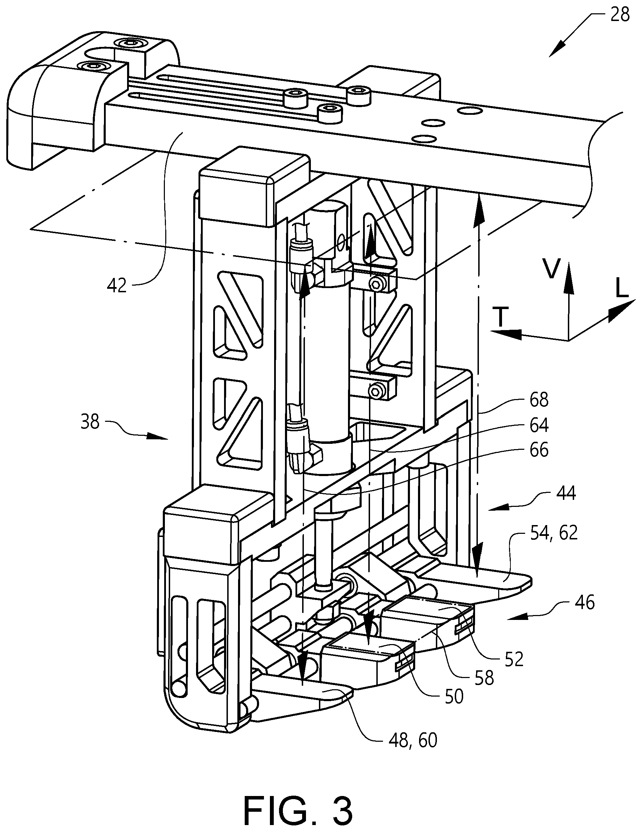

Each one of first carrying assembly 38 and the second carrying assembly 40 is in accordance with the below. For the sake of brevity, the below description refers to the first carrying assembly 38 which is illustrated in Fig. 3. However, it should be noted that the below description is equally applicable to the second carrying assembly 40.

As indicated in Fig. 3, the carrying assembly 38 comprises a delimitation assembly 44 and a supporting surface assembly 46 connected to the delimitation assembly 44. The supporting surface assembly 46 comprises at least one supporting surface. In the embodiment illustrated in Fig. 3, the supporting surface assembly 46 comprises four supporting surfaces 48, 50, 52, 54 but it is envisaged that other implementations of the supporting surface assembly 46 may comprise fewer or more supporting surfaces.

Moreover, as indicated in Fig. 3, the vertical direction V extends from the supporting surface assembly 46 to the carrying device base 42 when the carrying device 28 assumes the carrying configuration. Furthermore, as indicated in Fig. 2, when the carrying device 28 assumes the carrying configuration and the carrying device carries the stack of products 12, the delimitation assembly 44 of the first carrying assembly 38 and the delimitation assembly 56 of the second carrying assembly 40 are adapted to be located on opposite sides of the stack of products 12 in the transversal direction T.

Purely by way of example, the delimitation assembly 44 of the first carrying assembly 38 and the delimitation assembly 56 of the second carrying assembly 40 may be adapted not to contact the stack of products 12 when the carrying device 28 assumes the carrying configuration. However, it is also envisaged that in other embodiments of the carrying device 28, each one of the delimitation assembly 44 of the first carrying assembly 38 and the delimitation assembly 56 of the second carrying assembly 40 may comprise a contacting surface adapted to contact a portion of the stack of products 12 when the carrying device 28 assumes the carrying configuration.

Reverting to Fig. 3, each supporting surface 48, 50, 52, 54 of the supporting surface assembly 46 is adapted to contact and support the stack of products 12 such that the stack of products is located between the supporting surface 48, 50, 52, 54 and at least a portion of the carrying device base 42, in the vertical direction V, when the carrying device 28 assumes the carrying configuration and the carrying device 28 carries the stack of products.

As indicated in e.g. Fig. 3, the supporting surface assembly 46 extends in the longitudinal direction L and comprises a longitudinal supporting surface assembly centre portion 58, a longitudinal supporting surface assembly first end portion 60 and a longitudinal supporting surface assembly second end portion 62. The longitudinal supporting surface assembly first end portion 60 and the longitudinal supporting surface assembly second end portion 62 are located on opposite sides of the longitudinal supporting surface assembly centre portion 58 in the longitudinal direction L.

In the embodiment illustrated in Fig. 3, the longitudinal supporting surface assembly centre portion 58 is constituted by two supporting surfaces 50, 52 located longitudinally between the longitudinal supporting surface assembly first end portion 60, implemented as a supporting surface 48 in the Fig. 3 embodiment, and the longitudinal supporting surface assembly second end portion 62, implemented as a supporting surface 54 in the Fig. 3 embodiment. However, it is also envisaged that in other implementations, the longitudinal supporting surface assembly centre portion 58 may be constituted by a single surface (not shown in Fig. 3), alternatively the longitudinal supporting surface assembly centre portion 58 may comprise or be constituted by three or more supporting surfaces of the supporting surface assembly 46.

Irrespective of the implementation of each one of the longitudinal supporting surface assembly centre portion 58, the longitudinal supporting surface assembly first end portion 60 and the longitudinal supporting surface assembly second end portion 62, the carrying device 28 is such that when the carrying device 28 assumes the carrying configuration:
- the longitudinal supporting surface assembly centre portion 58 is located at a longitudinal supporting surface assembly centre portion distance 64 from the carrying device base 42 in the vertical direction V;
- the longitudinal supporting surface assembly first end portion 60 is located at a longitudinal supporting surface assembly first end portion distance 66 from the carrying device base in the vertical direction V, and
- the longitudinal supporting surface assembly second end portion 62 is located at a longitudinal supporting surface assembly second end portion distance 68 from the carrying device base in the vertical direction V.

According to the first aspect of the present disclosure, the longitudinal supporting surface assembly centre portion distance 64 is either greater than or smaller than each one of the longitudinal supporting surface assembly first end portion distance 66 and the longitudinal supporting surface assembly second end portion distance 68. In the Fig. 3 embodiment, the longitudinal supporting surface assembly centre portion distance 64 is smaller than each one of the longitudinal supporting surface assembly first end portion distance 66 and the longitudinal supporting surface assembly second end portion distance 68. As such, in the Fig. 3 embodiment, as seen in the vertical direction V, the longitudinal supporting surface assembly centre portion 58 of the supporting surface assembly 46 is elevated relative to each one of the longitudinal supporting surface assembly first end portion 60 and the longitudinal supporting surface assembly second end portion 62.

However, it is also envisaged that in other embodiments (not shown) of the first aspect of the present disclosure, the longitudinal supporting surface assembly centre portion distance 64 may be greater than each one of the longitudinal supporting surface assembly first end portion distance 66 and the longitudinal supporting surface assembly second end portion distance 68. As such, in such an embodiment, as seen in the vertical direction V, the longitudinal supporting surface assembly centre portion 58 of the supporting surface assembly 46 is lowered relative to each one of the longitudinal supporting surface assembly first end portion 60 and the longitudinal supporting surface assembly second end portion 62.

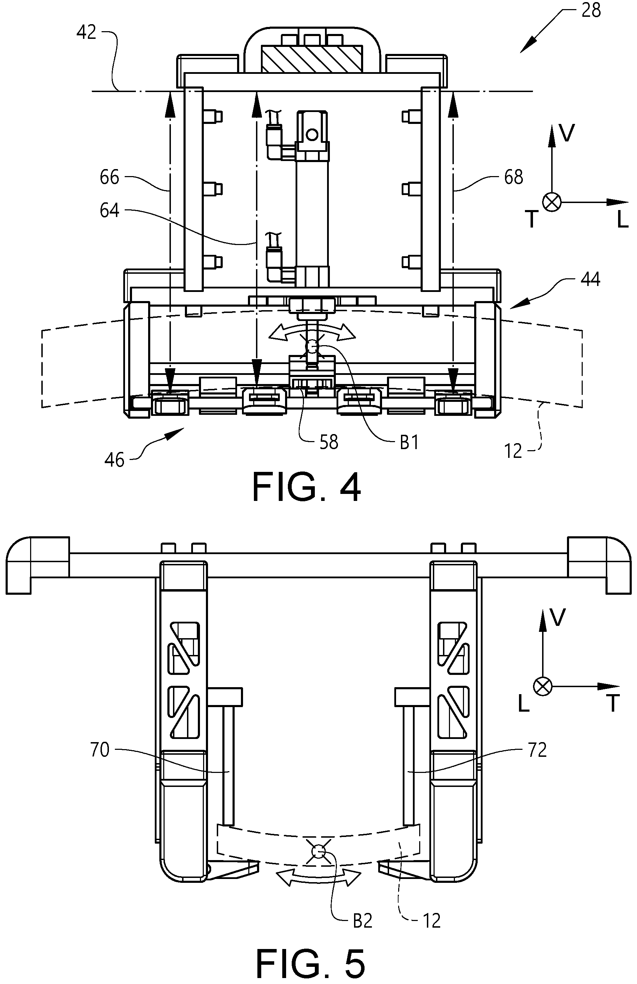

An advantage associated with the above is presented hereinbelow with reference to Fig. 4 and Fig. 5. Fig. 4 is a cross-sectional side view of the Fig. 3 carrying device 28 assuming the carrying configuration and carrying a stack of products 12. As indicated in Fig. 4, due to the fact that the longitudinal supporting surface assembly centre portion distance 64 is smaller than each one of the longitudinal supporting surface assembly first end portion distance 66 and the longitudinal supporting surface assembly second end portion distance 68, the stack of products 12, when supported by the supporting surface assembly 46, will assume a shape that is bent around a bending axis B1 forming an angle with a reference axis extending in the longitudinal direction L. Preferably, and as indicated in Fig. 4 example, the bending axis B1 extends in the transversal direction T.

For the sake of completeness, it should be noted that for an embodiment of the carrying device 28 in which the longitudinal supporting surface assembly centre portion distance 64 is greater than each one of the longitudinal supporting surface assembly first end portion distance 66 and the longitudinal supporting surface assembly second end portion distance 68, the stack of products 12, when supported by the supporting surface assembly 46, will also assume a shape that is bent around a bending axis B1 forming an angle with a reference axis extending in the longitudinal direction L, preferably extending in the transversal direction T. However, for such an embodiment, the bending will be in the opposite direction as compared to what is illustrated in Fig. 4 since the bending in such an embodiment may result in that the stack of products 12 will assume a u-shape (not shown).

Irrespective of the direction of the bending around the bending axis B1, a bent shape of the stack of products 12 in turn implies that the stack of products 12 is less prone to be bent around a second bending axis B2 extending in the longitudinal direction L as compared to a stack of products supported by supporting surface assemblies being planar. To this end, reference is made to Fig. 5 illustrating a stack of products 12 carried by a carrying device 28 having supporting surface assemblies being planar. As may be gleaned from Fig. 5, the stack of products 12 may assume a shape that is bent around a second bending axis B2 extending in the longitudinal direction L. Such a bent shape around the second bending axis B2 may in turn imply a relatively high risk that the stack of product 12 may collapse, e.g. downwards in Fig. 5, when carried by the Fig. 5 carrying device. In order to mitigate such a risk, a carrying device 28 may comprise one or more upper holding elements 70, 72, see Fig. 5, adapted to apply a force onto the stack of products 12 from above in order to keep the stack of products 12 in place.

The above-mentioned risk of the stack of products 12 collapsing may be appropriately low with a carrying device 28 in accordance with the present disclosure, see e.g. Fig. 4. Moreover, the carrying device 28 according to the present disclosure may preferably be devoid of any upper holding elements 70, 72 since the need for applying a force onto the stack of products 12 from above in order to keep the stack of products 12 in place may be reduced or even eliminated.

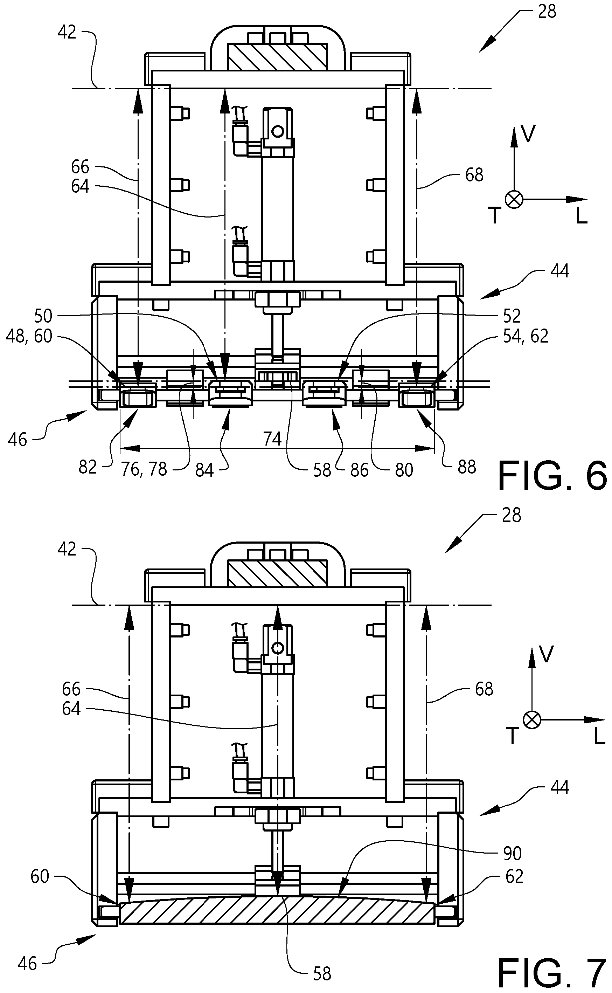

Fig. 6 corresponds to Fig. 4 although the stack of products 12 has been removed from Fig. 6. As illustrated in Fig. 6, the longitudinal supporting surface assembly first end portion 60 is located at a supporting surface assembly longitudinal distance 74, in the longitudinal direction, from the longitudinal supporting surface assembly second end portion 62. As indicated in Fig. 6, the supporting surface assembly longitudinal distance 74 relates to the largest distance between the longitudinal supporting surface assembly first end portion 60 and the longitudinal supporting surface assembly second end portion 62 in the longitudinal direction L.

Furthermore, as indicated in Fig. 6, a supporting surface assembly vertical distance 76 associated with the supporting surface assembly 46 is the smallest absolute value difference of a first difference 78 between the longitudinal supporting surface assembly first end portion distance 66 and the longitudinal supporting surface assembly centre portion distance 64 and a second difference 80 between the longitudinal supporting surface assembly second end portion distance 68 and the longitudinal supporting surface assembly centre portion distance 64. In the Fig. 6 example, the first difference 78 is the same as the second difference 80 such that the supporting surface assembly vertical distance 76 equals each one of the first difference 78 and the second difference 80. However, it is envisaged that in other embodiments, the first difference 78 and the second difference 80 may be different and, in such embodiments, the supporting surface assembly vertical distance 76 is the smallest of the first difference 78 and the second difference 80.

As such, if the supporting surface assembly vertical distance 76 is denoted ΔV, the first difference 78 between the longitudinal supporting surface assembly first end portion distance 66 and the longitudinal supporting surface assembly centre portion distance 64 is denoted ΔV, and the second difference 80 between the longitudinal supporting surface assembly second end portion distance 68 and the longitudinal supporting surface assembly centre portion distance 64 is denoted ΔV₂, ΔV may be formulated in accordance with the following: Δ*V* = min (|ΔV₁|, |ΔV₂|).

Irrespective of whether the first difference 78 and the second difference 80 are equal or different, a ratio between the supporting surface assembly vertical distance 76 and the supporting surface assembly longitudinal distance 74 may be at least 1%, preferably at least 2%, more preferred at least 3%. As non-limiting examples, it is also envisaged that in embodiments of the carrying device 28, the ratio between the supporting surface assembly vertical distance 76 and the supporting surface assembly longitudinal distance may be at least 5%, preferably at least 10%.

Moreover, purely by way of example, the supporting surface assembly vertical distance 76 may be at least 2 mm, preferably at least 3 mm. However, as non-limiting examples, it is envisaged that in embodiments of the carrying device 28, the supporting surface assembly vertical distance 76 may be at least 5 mm, alternatively at least 10 mm. By way of example only, the supporting surface assembly vertical distance 76 in accordance with any one of the above examples need not necessarily be linked to the ratio between the supporting surface assembly vertical distance 76 and the supporting surface assembly longitudinal distance 74.

Furthermore, in the Fig. 6 example, the longitudinal supporting surface assembly centre portion distance 64 is smaller than each one of the longitudinal supporting surface assembly first end portion distance 66 and the longitudinal supporting surface assembly second end portion distance 68. However, it should also be noted that the above ranges, i.e. at least 1%, preferably at least 2%, more preferred at least 3%, alternatively at least 5% or 10%, as well as at least 2 mm, preferably at least 3 mm, alternatively at least 5 mm or 10 mm, are equally applicable to embodiments of the carrying device 28 in which the longitudinal supporting surface assembly centre portion distance 64 is greater than each one of the longitudinal supporting surface assembly first end portion distance 66 and the longitudinal supporting surface assembly second end portion distance 68.

Moreover, as indicated in Fig. 6, the carrying assembly 28 may comprise a set of supporting teeth, each tooth 82, 84, 86, 88 of the set of supporting teeth comprising a supporting surface 48, 50, 52, 54 forming part of the supporting surface assembly 46. Purely by way of example, the set of supporting teeth may comprise three or more teeth. In the Fig. 6 example, the set of supporting teeth comprises four teeth 82, 84, 86, 88.

However, it should also be noted that in other embodiments of the carrying assembly 28, the supporting surface assembly 46 may be implemented in other ways. To this end, reference is made to Fig. 7 illustrating that an embodiment of the carrying assembly 28 in which the supporting surface assembly 46 is constituted by a single surface 90 which for instance may have an arched shape. Thus, though purely by way of example, each one of the longitudinal supporting surface assembly centre portion 58; the longitudinal supporting surface assembly first end portion 60, and the longitudinal supporting surface assembly second end portion 62, may be portions of the same single surface 90.

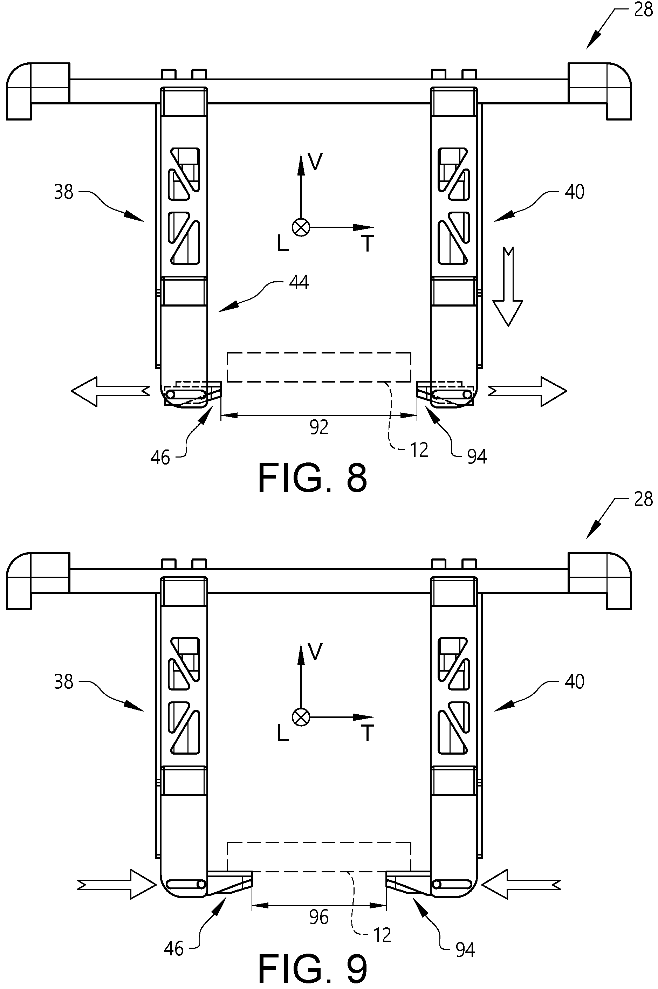

Turning to Fig. 8, the carrying device 28 may be adapted to assume a picking configuration in which the carrying device 28 is adapted to pick the stack of products 12. A smallest distance in the transversal direction T between a portion of the supporting surface assembly 46 of the first carrying assembly 38 and a portion of the supporting surface assembly 94 of the second carrying assembly 40 is a picking transversal distance 92.

As indicated in Fig. 9, when the carrying device 28 assumes the carrying configuration, a smallest distance in the transversal direction T between the portion of the supporting surface assembly 46 of the first carrying assembly 38 and the portion of the supporting surface assembly 94 of the second carrying assembly 40 is a carrying transversal distance 96. As may be realized when comparing the picking configuration illustrated in Fig. 8 to the carrying configuration illustrated in Fig. 9, the carrying transversal distance 96 is smaller than the picking transversal distance 92.

The carrying device 28 being adapted to assuming the picking configuration as well as the carrying configuration implies that the carrying device 28 can pick and carry, respectively, the stack of products 12. Purely by way of example, and as indicated by the downwards pointing arrow in Fig. 8, the carrying device 28, when assuming the picking configuration, may be lowered relative to the stack of products 12 such that the stack of products 12 will be located between the first and second carrying assemblies 38, 40. Thereafter, the carrying device 28 may be controlled so as to assume the carrying configuration, as exemplified in Fig. 9, whereby each supporting surface assembly 46, 94 is adapted to contact and support the stack of products 12.

Purely by way of example, a difference between the picking transversal distance 92 and the carrying transversal distance 96 is at least 5 mm.

The picking configuration, with its picking transversal distance 92, and the carrying configuration, with its carrying transversal distance 96, may be achieved in a plurality of different ways.

Purely by way of example, and as indicated by the arrows in Fig. 8 and Fig. 9, the supporting surface assembly 46 may be displaceable, preferably linearly displaceable, in the transversal direction T relative to the delimitation assembly 38 in order to obtain the carrying configuration and the picking configuration, respectively.

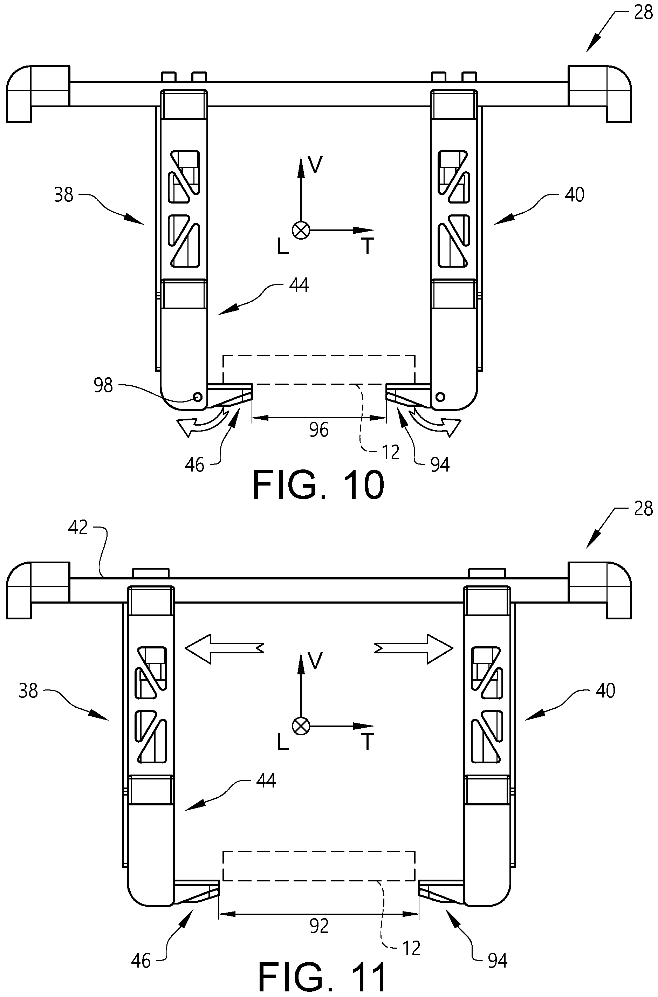

Fig. 10 illustrates a first carrying assembly 38 of another embodiment of the carrying device 28. As indicated in Fig. 10, the supporting surface assembly 46 may be pivotable around a pivot axis 98, extending in the longitudinal direction L, relative to the delimitation assembly 44 in order to obtain the carrying configuration and the picking configuration, respectively.

Fig. 11 illustrates an embodiment of the carrying device 28 in which the delimitation assembly 44 is displaceable, preferably linearly displaceable, in the transversal direction T relative to the carrying device base 42 in order to obtain the carrying configuration and the picking configuration, respectively. In the Fig. 11 embodiment, the first carrying assembly 38 is displaceable, preferably linearly displaceable, in the transversal direction T relative to the carrying device base 42 in order to achieve that the delimitation assembly 44 is displaceable, preferably linearly displaceable, in the transversal direction T relative to the carrying device base 42. However, it is also envisaged that in embodiments of the carrying device 28, the delimitation assembly 44 may be displaceable, preferably linearly displaceable, in the transversal direction T relative to a portion of the first carrying assembly 38.

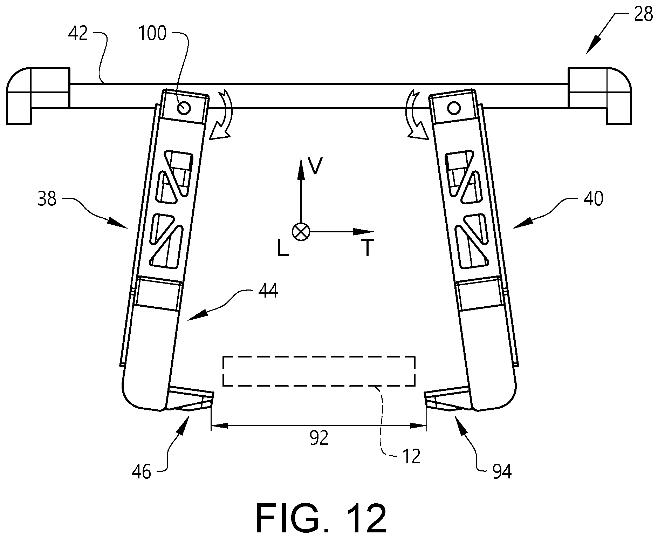

Moreover, Fig. 12 illustrates another embodiment of the carrying device 28 in which the delimitation assembly 44 is pivotable around a pivot axis 100, extending in the longitudinal direction L, relative to the carrying device base 42 in order to obtain the carrying configuration and the picking configuration, respectively. In the Fig. 12 embodiment, the first carrying assembly 38 is pivotable around a pivot axis 100, extending in the longitudinal direction L, relative to the carrying device base 42 in order to achieve that the delimitation assembly 44 is pivotable around a pivot axis 100, extending in the longitudinal direction L, relative to the carrying device base 42. However, it is also envisaged that in embodiments of the carrying device 28, the delimitation assembly 44 is pivotable around a pivot axis 100, extending in the longitudinal direction L, relative to a portion of the first carrying assembly 38.

The above presentations of the delimitation assembly 44 of the first carrying assembly 38 with reference to each one of Fig. 8 to Fig. 12 are equally applicable to the second carrying assembly 40 of the carrying device 28. However, it is also envisaged that in embodiments of the carrying device 28, the first carrying assembly 38 may be different to the second carrying assembly 40. As a non-limiting example, the second carrying assembly 40 may be fixedly connected to the carrying device base 42 whereas the first carrying assembly 38 may be movable relative to the carrying device base 42.

It should be noted that further embodiments of the carrying device 28 may comprise any combination of the features that: the supporting surface assembly 46 is displaceable, preferably linearly displaceable, in the transversal direction T relative to the delimitation assembly 44: the supporting surface assembly 46 is pivotable around a pivot axis 98, extending in said longitudinal direction L, relative to the delimitation assembly 44; the delimitation assembly 44 is displaceable, preferably linearly displaceable, in the transversal direction T relative to the carrying device base, and the delimitation assembly 44 is pivotable around a pivot axis 100, extending in the longitudinal direction L, relative to the carrying device base 42 in order to obtain the carrying configuration and the picking configuration, respectively.

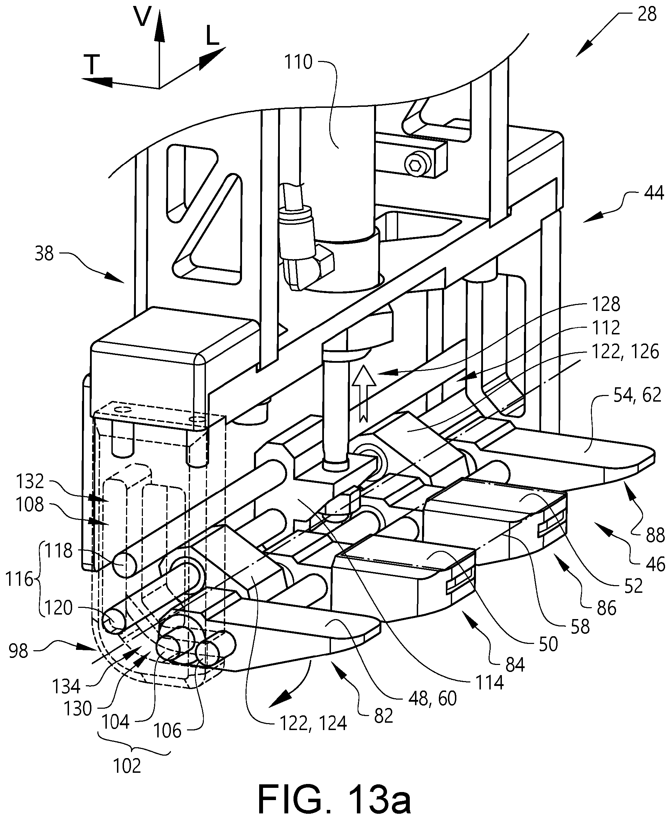

To this end, reference is made to Fig. 13a illustrating an embodiment of the carrying device 28 in which the supporting surface assembly 46 is displaceable in the transversal direction T relative to the delimitation assembly 44 and also is pivotable relative to the delimitation assembly 44.

In the Fig. 13a embodiment, the carrying assembly 28 comprises a set of supporting teeth, each tooth 82, 84, 86, 88 of the set of supporting teeth comprising a supporting surface 48, 50, 52, 54 forming part of the supporting surface assembly 46. However, it is also envisaged that variants of the Fig. 13a embodiment may comprise other implementations of the supporting surface assembly 46, such as a supporting surface assembly 46 constituted by a single surface 90 which for instance may have an arched shape as exemplified above with reference to Fig. 7.

As illustrated in Fig. 13a, the supporting surface assembly 46 comprises a supporting surface assembly shaft assembly 102 comprising at least one supporting surface assembly shaft 104, 106. In the Fig. 13a embodiment, the surface assembly shaft assembly 102 comprises two supporting surface assembly shafts 104, 106.

Moreover, as indicated in a partial cross-section in Fig. 13a, the delimitation assembly 44 comprises a guide groove 108 adapted to guide each supporting surface assembly shaft 104, 106 of the supporting surface assembly shaft assembly 102. The supporting surface assembly shaft assembly 102 and the guide groove 108 is such that when the supporting surface assembly shaft assembly 102 is displaced relative to the guide groove 108, the supporting surface assembly 46 can simultaneously be displaced in the transversal direction T and also be pivoted around a pivot axis 98, extending in the longitudinal direction L, relative to the delimitation assembly 44.

To this end, though purely by way of example, the carrying assembly 28, for instance the first carrying assembly 38 as exemplified in Fig. 13a, may comprise an actuator 110, such as a linear actuator which may be implemented as a hydraulic or pneumatic cylinder. Moreover, the carrying assembly 28, for instance the first carrying assembly 38 as exemplified in Fig. 13a, may comprise a control assembly 112. As indicated in Fig. 13a, the actuator 110 may be connected to the control assembly 112 such that the actuator 110 can control the position of the control assembly 112 relative to the delimitation assembly 44.

In the Fig. 13a embodiment, the actuator 110 is connected to the control assembly 112 such that the actuator 110 can control the position of the control assembly 112 in the vertical direction V of the carrying device 28. However, it is envisaged that in other embodiments, the actuator 110 may be connected to the control assembly 112 such that the actuator 110 can control the position of the control assembly 112 in another direction, e.g. a linear direction having a first component extending in the transversal direction T and a second component extending on the vertical direction V of the carrying device 28.

Moreover, as indicated in Fig. 13a, the control assembly 112 may comprise a control assembly connector 114 and a control assembly shaft assembly 116 comprising at least one control assembly shaft 118, 120. In the Fig. 13a embodiment, the control assembly shaft assembly 116 comprises two control assembly shafts 118, 120.

Moreover, as indicated in Fig. 13a, the carrying assembly 28, for instance the first carrying assembly 38, comprises a link arm assembly 122 comprising at least one link arm 124, 126. In the Fig. 13a embodiment, the link arm assembly 122 comprises two link arms 124, 126 but in other embodiments, the link arm assembly 122 may comprise only one link arm or more than two link arms. A control assembly shaft 120 of the control assembly shaft assembly 116 is connected to a supporting surface assembly shaft 104 of the supporting surface assembly shaft assembly 102 via the link arm assembly 122.

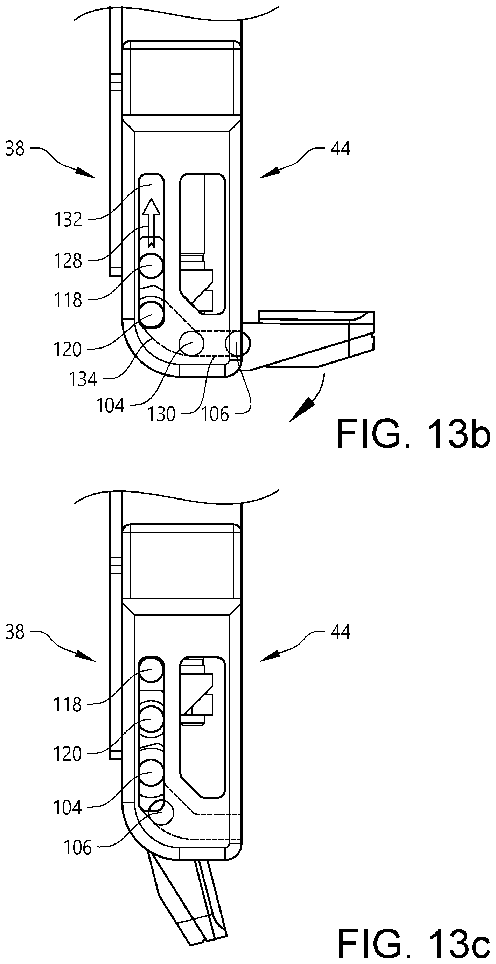

Fig. 13a illustrates the carrying assembly 28, in particular the first carrying assembly 38, in the carrying configuration. In order to change the configuration of the carrying assembly 28 from the carrying configuration to the picking configuration, the actuator 110 is actuated so as to displace the control assembly 112 in the vertical direction, as indicated by the upwards pointing arrow 128 in Fig. 13a, see also Fig. 13b.

Due to the fact that a control assembly shaft 120 of the control assembly shaft assembly 116 is connected to a supporting surface assembly shaft 104 of the supporting surface assembly shaft assembly 102 via the link arm assembly 122, the displacement of the control assembly 112 will result in a displacement of the supporting surface assembly shaft 104 and consequently in a displacement of the supporting surface assembly 46.

The guide groove 108 may comprise two portions, a first guide groove portion 130 extending in the transversal direction T and a second guide groove portion 132 extending in the vertical direction V. Moreover, the first guide groove portion 130 and the second guide groove portion 132 may be connected to each other via an intermediate guide groove portion 134 which may have an arcuate shape.

By virtue of the above features of the guide groove 108, when the supporting surface assembly shaft 104 is displaced by the displacement of the control assembly 112, the supporting surface assembly shaft 104 will firstly be displaced along the first guide groove portion 130 in the transversal direction T, thereby resulting in that the supporting surface assembly 46 will be displaced in the transversal direction T relative to the delimitation assembly 44.

Thereafter, when the supporting surface assembly shaft 104 is displaced along the intermediate guide groove portion 134 the supporting surface assembly 46 will be displaced in the transversal direction T as well as be pivoted relative to the delimitation assembly 44.

Thereafter, when the supporting surface assembly shaft 104 is displaced along the second guide groove portion 132, the supporting surface assembly 46 will be further pivoted relative to the delimitation assembly 44. To this end, reference is made to Fig. 13c.

As may be realized from the above, the carrying assembly 28 exemplified in Fig. 13a implies that the supporting surface assembly 46 can be displaced in the transversal direction T and also pivoted around a pivot axis 98, extending in the longitudinal direction L, relative to the delimitation assembly 44.

It should be noted that the embodiment presented above with reference to Figs. 13a -13c, which is also recited by appended claim 10, need not be limited to carrying devices 28 according to appended claim 1. As such, it is envisaged that the embodiment presented above with reference to Figs. 13a - 13c and/or by appended claim 10 may also be used for carrying devices in which the longitudinal supporting surface assembly centre portion distance 64 is not greater than or smaller than each one of the longitudinal supporting surface assembly first end portion distance 66 and the longitudinal supporting surface assembly second end portion distance 68.

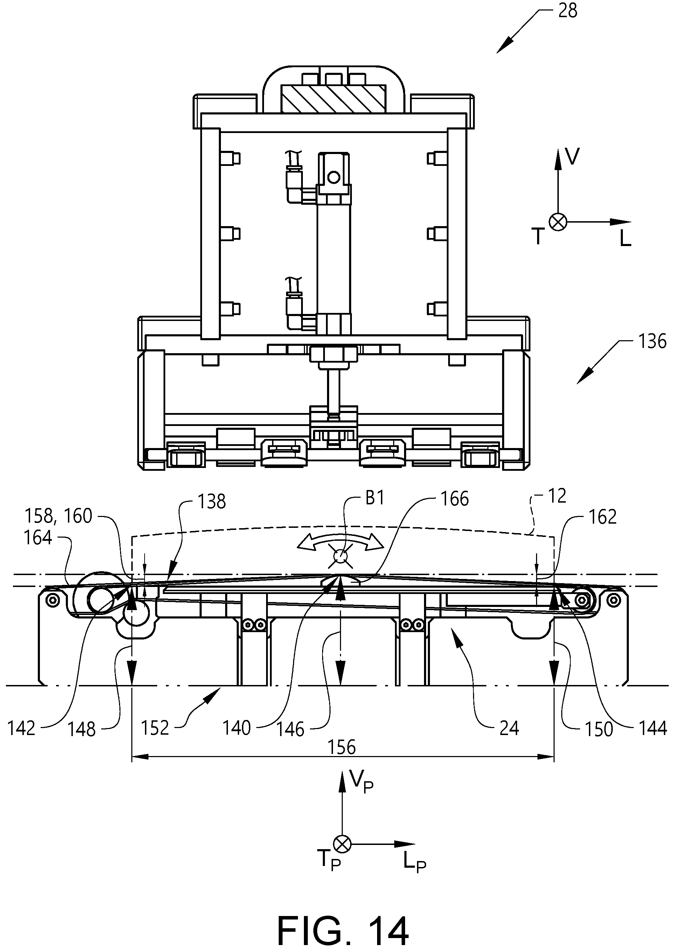

Fig. 14 illustrates portion of a handling system 136 for handling a stack of products 12, in particular a stack of sheets, such as a stack of sheets of paper. The handling system comprises a picking station 24 and a carrying device 28 according to the first aspect of the present disclosure or a transferring device 18 according to the second aspect of the present disclosure. The carrying device 28 is adapted to carry a stack of products from the picking station. In the Fig. 14 example, the handling system 136 comprises picking station 24 and a carrying device 28 according to the first aspect of the present disclosure.

Purely by way of example, the handling system 136 may form part of a production line 10 for handling a stack of products 12, an example of which has been presented above with reference to Fig. 1.

As indicated by way of example in Fig. 14, the picking station 24 may comprise a picking station supporting surface assembly 138, comprising at least one picking station supporting surface, adapted to support the stack of products 12 and from which the carrying device 28 is adapted to pick the stack of products 12. In the Fig. 14 embodiment, the picking station supporting surface assembly 138 is constituted by a single surface but it is envisaged that other embodiments of the picking station supporting surface assembly 138 may comprise two or more picking station supporting surfaces. The picking station extends in a picking station longitudinal direction Lₚ, a picking station transversal direction Tₚ and a picking station vertical direction Vₚ. The picking station directions are mutually perpendicular.

Moreover, as indicated in Fig. 14, when the carrying device 28 assumes the picking configuration for picking the stack of products 12 from the picking station supporting surface assembly 138, the picking station longitudinal direction Lₚ is parallel to the longitudinal direction L of the carrying device 28. Furthermore, as indicated in Fig. 14, when the carrying device 28 assumes the picking configuration for picking the stack of products 12 from the picking station supporting surface assembly 138, the picking station transversal direction Tₚ is preferably parallel to the transversal direction T of the carrying device 28 and the picking station vertical direction Vₚ is preferably parallel to the vertical direction V of the carrying device 28.

As seen in the picking station longitudinal direction Lₚ, the picking station supporting surface assembly 138 comprises a picking station supporting surface assembly centre portion 140, a picking station supporting surface assembly first end portion 142 and a picking station supporting surface assembly second end portion 144. The picking station supporting surface assembly first end portion 142 and the picking station supporting surface assembly second end portion 144 are located on opposite sides of the picking station supporting surface assembly centre portion 140 in the picking station longitudinal direction Lₚ.

Moreover, as indicated in Fig. 14, in the picking station vertical direction Vₚ, the picking station supporting surface assembly centre portion 140 has a picking station supporting surface assembly centre portion elevation 146. Moreover, the picking station supporting surface assembly first end portion 142 has a picking station supporting surface assembly first end portion elevation 148, and the picking station supporting surface assembly second end portion 144 has a picking station supporting surface assembly second end portion elevation 150. As indicated in Fig. 14, an "elevation" may refer to a distance in the picking station vertical direction Vₚ from a reference plane 152 extending perpendicular to the picking station vertical direction Vₚ being located below each one of the picking station supporting surface assembly centre portion140; the picking station supporting surface assembly first end portion 142, and the picking station supporting surface assembly second end portion 144. Purely by way of example, the reference plane 152 may be associated with a portion of the picking station 24.

With reference to Fig. 14, the picking station supporting surface assembly centre portion elevation 146 is smaller than or greater than each one of the picking station supporting surface assembly first end portion elevation 148 and the picking station supporting surface assembly second end portion elevation 150. In the Fig. 14 embodiment, the picking station supporting surface assembly centre portion elevation 146 is greater than each one of the picking station supporting surface assembly first end portion elevation 148 and the picking station supporting surface assembly second end portion elevation 150. However, it is also envisaged that in other embodiments, the picking station supporting surface assembly centre portion elevation 146 may be smaller than each one of the picking station supporting surface assembly first end portion elevation 148 and the picking station supporting surface assembly second end portion elevation 150.

As indicated in Fig. 14, a picking station according to the above implies that a stack of products 12 supported by the picking station supporting surface assembly 138 will assume a picking shape that is bent around a bending axis B1 forming an angle with a reference axis extending in the picking station longitudinal direction Lₚ. Preferably, the bending axis B1 extends in the picking station transversal direction Tₚ. A bent picking shape according to any one of the above examples in turn implies that the stack of products 12 assumes a shape that can be picked up by the carrying device 28 in a straightforward way.

Purely by way of example, and as indicated in Fig. 14, the picking station supporting surface assembly first end portion 142 is located at a picking station longitudinal distance 156, in the picking station longitudinal direction Lₚ, from the picking station supporting surface assembly second end portion 144.

Moreover, again with reference to Fig. 14, a picking station supporting surface assembly vertical distance 158 associated with the picking supporting surface is the smallest absolute value difference between a first picking station difference 160 between the picking station supporting surface assembly centre portion elevation 146 and the picking station supporting surface assembly first end portion elevation 148 and a second picking station difference 162 between the picking station supporting surface assembly centre portion elevation 146 and the picking station supporting surface assembly second end portion elevation 150.

In the Fig. 14 example, the first picking station difference 160 is the same as the second picking station difference 162 such that the picking station supporting surface assembly vertical distance 158 equals each one of the first picking station difference 160 and the second picking station difference 162. However, it is envisaged that in other embodiments, the first picking station difference 160 and the second picking station difference 162 may be different and in such embodiments, the picking station supporting surface assembly vertical distance 158 is the smallest of the first picking station difference 160 and the second picking station difference 162.

Irrespective of if the first picking station difference 160 and the second picking station difference 162 are the same or not, a ratio between the picking station supporting surface assembly vertical distance 158 and the picking supporting surface assembly longitudinal distance 156 may be at least 1%, preferably at least 2%, more preferred at least 3%. Furthermore, as non-limiting examples, it is envisaged that in embodiments of the picking station 24, the ratio between the picking station supporting surface assembly vertical distance 158 and the picking supporting surface assembly longitudinal distance 156 may be at least 5%, preferably at least 10%.

Moreover, purely by way of example, the picking station supporting surface assembly vertical distance 158 may be at least 2 mm, preferably at least 3 mm. Additionally, as non-limiting examples, it is envisaged that in embodiments of the picking station 24, the picking station supporting surface assembly vertical distance 158 may be at least 5 mm, preferably at least 10 mm.

By way of example only, the picking station supporting surface assembly vertical distance 158 in accordance with any one of the above examples need not necessarily be linked to the ratio between the picking station supporting surface assembly vertical distance 158 and the picking supporting surface assembly longitudinal distance 156.

Purely by way of example, and as indicated in Fig. 14, the picking station supporting surface assembly 138 may comprise, or be constituted by, a belt 164 such as a transport belt adapted to transport the stack of products 12 in the picking station longitudinal direction Lₚ. As a non-limiting example, and as indicated in Fig. 14, picking station 24 may comprise a protrusion 166 over which the belt 164 is adapted to rest in order to obtain the picking station supporting surface assembly centre portion 140. It is also envisaged that that implementations of the picking station supporting surface assembly 138 may comprise a plurality of belts 164, each one of which extending in the picking station longitudinal direction Lₚ.

Moreover, though purely by way of example, in the embodiment illustrated in Fig. 14, the carrying device 28 is such that the longitudinal supporting surface assembly centre portion distance 64 is smaller than each one of the longitudinal supporting surface assembly first end portion distance 66 and the longitudinal supporting surface assembly second end portion distance 68 and the picking station 24 is such that the picking station supporting surface assembly centre portion elevation 146 is greater than each one of the picking station supporting surface assembly first end portion elevation 148 and the picking station supporting surface assembly second end portion elevation 150. As such, the supporting surface assembly 46 and the picking station supporting surface assembly 138 may have complementary shapes.

However, such complementary shapes may be achieved in other ways. As a non-limiting example, the carrying device 28 may be such that the longitudinal supporting surface assembly centre portion distance 64 is greater than each one of the longitudinal supporting surface assembly first end portion distance 66 and the longitudinal supporting surface assembly second end portion distance 68 and the picking station 24 may be such that the picking station supporting surface assembly centre portion elevation 146 is smaller than each one of the picking station supporting surface assembly first end portion elevation 148 and the picking station supporting surface assembly second end portion elevation 150.

Purely by way of example, the present disclosure may be presented in accordance with any one of the below examples.

Example 1. A carrying device (28) for carrying a stack of products (12), in particular a stack of sheets, such as a stack of sheets of paper, said carrying device (28) extending in a longitudinal direction (L), a transversal direction (T) and a vertical direction (V), said directions being mutually perpendicular, said carrying device (28) being adapted to assume a carrying configuration in which said carrying device (28) is adapted to carry said stack of products (12),
said carrying device (28) comprising a first carrying assembly (38), a second carrying assembly (40) and a carrying device base (42), each one of said first carrying assembly (38) and a second carrying assembly (40) being connected to said carrying device base (42),
each one of first carrying assembly (38) and said second carrying assembly (40) being in accordance with the following:
   said carrying assembly comprising a delimitation assembly (44) and a supporting surface assembly (46) connected to the delimitation assembly (44), said supporting surface assembly (46) comprising at least one supporting surface (48, 50, 52, 54), wherein said vertical direction (V) extends from said supporting surface assembly (46) to said carrying device base (42) when said carrying device (28) assumes said carrying configuration;
   wherein, when said carrying device (28) assumes said carrying configuration and said carrying device (28) carries said stack of products (12), said delimitation assembly (44) of said first carrying assembly (38) and said delimitation assembly (56) of said second carrying assembly (40) are adapted to be located on opposite sides of said stack of products (12) in the transversal direction (T);
   each supporting surface (48, 50, 52, 54) of said supporting surface assembly (46) being adapted to contact and support said stack of products (12) such that said stack of products (12) is located between said supporting surface (48, 50, 52, 54) and at least a portion of said carrying device base (42), in said vertical direction (V), when said carrying device (28) assumes said carrying configuration and said carrying device (28) carries said stack of products (12),
   said supporting surface assembly (46) extending in said longitudinal direction (L) and comprising a longitudinal supporting surface assembly centre portion (58), a longitudinal supporting surface assembly first end portion (60) and a longitudinal supporting surface assembly second end portion (62),
   said longitudinal supporting surface assembly first end portion (60) and said longitudinal supporting surface assembly second end (62) portion being located on opposite sides of said longitudinal supporting surface assembly centre portion (58) in said longitudinal direction (L),
   said carrying device (28) being such that when said carrying device (28) assumes said carrying configuration:
      - said longitudinal supporting surface assembly centre portion (58) is located at a longitudinal supporting surface assembly centre portion distance (64) from said carrying device base (42) in the vertical direction (V);
      - said longitudinal supporting surface assembly first end portion (60) is located at a longitudinal supporting surface assembly first end portion distance (66) from said carrying device base (42) in the vertical direction (V), and
      - said longitudinal supporting surface assembly second end portion (62) is located at a longitudinal supporting surface assembly second end portion distance (68) from said carrying device base (42) in the vertical direction (V),
   characterized in that:
   said longitudinal supporting surface assembly centre portion distance (64) is either greater than or smaller than each one of said longitudinal supporting surface assembly first end portion distance (66) and said longitudinal supporting surface assembly second end portion distance (68).

Example 2. The carrying device (28) according to Example 1, wherein said longitudinal supporting surface assembly first end portion (60) is located at a supporting surface assembly longitudinal distance (74), in said longitudinal direction (L), from said longitudinal supporting surface assembly second end portion (62), a supporting surface assembly vertical distance (76) associated with said supporting surface assembly (46) being the smallest absolute value difference of a first difference (78) between said longitudinal supporting surface assembly first end portion distance (66) and said longitudinal supporting surface assembly centre portion distance (64) and a second difference (80) between said longitudinal supporting surface assembly second end portion distance (68) and said longitudinal supporting surface assembly centre portion distance (64), a ratio between said supporting surface assembly vertical distance and said supporting surface assembly longitudinal distance (74) being at least 1%, preferably at least 2%, more preferred at least 3%.

Example 3. The carrying device (28) according to Example 2, wherein said supporting surface assembly vertical distance is at least 2 mm, preferably at least 3 mm.

Example 4. The carrying device (28) according to any one of the preceding Examples, wherein said carrying assembly comprises a set of supporting teeth, each tooth (82, 84, 86, 88) of said set of supporting teeth comprising a supporting surface (48, 50, 52, 54) forming part of said supporting surface assembly (46).

Example 5. The carrying device (28) according to any one of the preceding Examples, wherein said set of supporting teeth comprises three or more teeth (82, 84, 86, 88).

Example 6. The carrying device (28) according to any one of the preceding Examples, wherein said carrying device (28) is adapted to assume a picking configuration in which said carrying device (28) is adapted to pick said stack of products (12), a smallest distance in said transversal direction (T) between a portion of said supporting surface assembly (46) of said first carrying assembly (38) and a portion of said supporting surface assembly (94) of said second carrying assembly (40) is a picking transversal distance (92), when said carrying device (28) assumes said carrying configuration, a smallest distance in said transversal direction (T) between said portion of said supporting surface assembly (46) of said first carrying assembly (38) and said portion of said supporting surface assembly (94) of said second carrying assembly (40) is a carrying transversal distance (96), said carrying transversal distance (96) being smaller than said picking transversal distance (92).

Example 7. The carrying device (28) according to Example 6, wherein a difference between said picking transversal distance (92) and said carrying transversal distance (96) is at least 5 mm.

Example 8. The carrying device (28) according to any one of Example 6 or Example 7, wherein said supporting surface assembly (46) is displaceable, preferably linearly displaceable, in said transversal direction (T) relative to said delimitation assembly (44) in order to obtain said carrying configuration and said picking configuration, respectively.

Example 9. The carrying device (28) according to any one of Examples 6 to 8, wherein said supporting surface assembly (46) is pivotable around a pivot axis (98), extending in said longitudinal direction (L), relative to said delimitation assembly (44) in order to obtain said carrying configuration and said picking configuration, respectively.

Example 10. The carrying device (28) according to any one of Examples 6 to 9, wherein said supporting surface assembly (46) comprises a supporting surface assembly shaft assembly (102) comprising at least one supporting surface assembly shaft (104, 106), said delimitation assembly (44) comprising a guide groove (108) adapted to guide each supporting surface assembly shaft (104, 106) of said supporting surface assembly shaft assembly (102), said supporting surface assembly shaft assembly (102) and said guide groove (108) being such that when said supporting surface assembly shaft assembly (102) is displaced relative to said guide groove (108), said supporting surface assembly (46) can be displaced in said transversal direction (T) and also pivoted around a pivot axis, extending in said longitudinal direction (L), relative to said delimitation assembly (44).

Example 11. The carrying device (28) according to any one of Examples 6 to 10, wherein said delimitation assembly (44) is displaceable, preferably linearly displaceable, in said transversal direction (T) relative to said carrying device base (42) in order to obtain said carrying configuration and said picking configuration, respectively.

Example 12. The carrying device (28) according to any one of Examples 6 to 11, wherein said delimitation assembly (44) is pivotable around a pivot axis (100), extending in said longitudinal direction (L), relative to said carrying device base (42) in order to obtain said carrying configuration and said picking configuration, respectively.

Example 13. A transferring device (18) for transferring a stack of products (12), in particular a stack of sheets, such as a stack of sheets of paper, from a first position (24) to a second position (26), said transferring device (18) comprising a carrying device (28) according to any one of the preceding Examples and a carrying device mover (30) adapted to move said carrying device (28), preferably said carrying device mover (30) being adapted to move said carrying device (28) in each one of said longitudinal direction (L), said transversal direction (T) and said vertical direction (V).

Example 14. The transferring device (18) according to Example 13, wherein said carrying device mover (30) comprises, or is constituted by, a robot, preferably said robot comprising a robotic arm (32) comprising a robotic arm end (34), said carrying device (28) being disposed on said robotic arm end (34).

Example 15. A handling system (136) for handling a stack of products (12), in particular a stack of sheets, such as a stack of sheets of paper, said handling system (136) comprising a picking station (24) and a carrying device (28) according to any one of Examples 1 - 12 or a transferring device (18) according to any one of Examples 13 - 14, said carrying device (28) being adapted to carry a stack of products (12) from said picking station (24).

Example 16. The handling system (136) according to Example 15, wherein said picking station (24) comprises a picking station supporting surface assembly (138), comprising at least one picking station supporting surface, adapted to support said stack of products (12) and from which said carrying device (28) is adapted to pick said stack of products (12), said picking station (24) extending in a picking station longitudinal direction (Lp), a picking station transversal direction (Tp) and a picking station vertical direction (Vp), said picking station directions (Lp, Tp, Vp) being mutually perpendicular, when said carrying device (28) assumes said picking configuration for picking said stack of products (12) from said picking station supporting surface assembly (138), said picking station longitudinal direction (Lp) is parallel to said longitudinal direction (L) of said carrying device (28), wherein, as seen in said picking station longitudinal direction (Lp), said picking station supporting surface assembly (138) comprises a picking station supporting surface assembly centre portion (140), a picking station supporting surface assembly first end portion (142) and a picking station supporting surface assembly second end portion (144), said picking station supporting surface assembly first end portion (142) and said picking station supporting surface assembly second end portion (144) being located on opposite sides of said picking station supporting surface assembly centre portion (140) in the picking station longitudinal direction (Lp), wherein, in said picking station vertical direction (Vp), said picking station supporting surface assembly centre portion (140) has a picking station supporting surface assembly centre portion elevation (146); said picking station supporting surface assembly first end portion (142) has a picking station supporting surface assembly first end portion elevation (148), and said picking station supporting surface assembly second end portion (144) has a picking station supporting surface assembly second end portion elevation (150), said picking station supporting surface assembly centre portion elevation (146) being either smaller than or greater than each one of said picking station supporting surface assembly first end portion elevation (148) and said picking station supporting surface assembly second end portion elevation (150).

Example 17. The handling system (136) according to Example 16, wherein said picking station supporting surface assembly first end portion (142) is located at a picking station longitudinal distance (156), in said picking station longitudinal direction (Lp), from said picking station supporting surface assembly second end portion (144), a picking station supporting surface assembly vertical distance (158) associated with said picking supporting surface (138) being the smallest absolute value difference between a first picking station difference (160) between said picking station supporting surface assembly centre portion elevation (146) and said picking station supporting surface assembly first end portion elevation (148) and a second picking station distance (162) between said picking station supporting surface assembly centre portion elevation (146) and said picking station supporting surface assembly second end portion elevation (150), a ratio between said picking station supporting surface assembly vertical distance (158) and said picking supporting surface assembly longitudinal distance (156) being at least 1%, preferably at least 2%, more preferred at least 3%.

Example 18. The handling system (136) according to Example 17, wherein said picking station supporting surface assembly vertical distance (158) is at least 2 mm, preferably at least 3 mm.

Example 19. The handling system (136) according to any one of Examples 16 - 18, wherein said carrying device (28) is such that said longitudinal supporting surface assembly centre portion distance (64) is smaller than each one of said longitudinal supporting surface assembly first end portion distance (66) and said longitudinal supporting surface assembly second end portion distance (68) and wherein said picking station (24) is such that said picking station supporting surface assembly centre portion elevation (146) is greater than each one of said picking station supporting surface assembly first end portion elevation (148) and said picking station supporting surface assembly second end portion elevation (150).

Example 20. The handling system (136) according to any one of Examples 16 - 18, wherein said carrying device (28) is such that said longitudinal supporting surface assembly centre portion distance (64) is greater than each one of said longitudinal supporting surface assembly first end portion distance (66) and said longitudinal supporting surface assembly second end portion distance (68) and wherein said picking station (24) is such that said picking station supporting surface assembly centre portion elevation (146) is smaller than each one of said picking station supporting surface assembly first end portion elevation (148) and said picking station supporting surface assembly second end portion elevation (150).

Example 21. A use of a carrying device (28) according to any one of Examples 1 - 12 for carrying a stack of products (12), in particular a stack of sheets, such as a stack of sheets of paper.

Example 22. A use of a transferring device (18) according to any one of Examples 13 - 14 for transferring a stack of products (12), in particular a stack of sheets, such as a stack of sheets of paper, from a first position (24) to a second position (26).

Example 23. A use of a handling system (136) according to any one of Examples 15 - 20 for handling a stack of products (12), in particular a stack of sheets, such as a stack of sheets of paper.

It should be noted that the above embodiments merely serve as examples of the present disclosure and that further combinations and variants are contemplated within the scope of the appended claims.

## Claims

1. A carrying device (28) for carrying a stack of products (12), in particular a stack of sheets, such as a stack of sheets of paper, said carrying device (28) extending in a longitudinal direction (L), a transversal direction (T) and a vertical direction (V), said directions being mutually perpendicular, said carrying device (28) being adapted to assume a carrying configuration in which said carrying device (28) is adapted to carry said stack of products (12),
said carrying device (28) comprising a first carrying assembly (38), a second carrying assembly (40) and a carrying device base (42), each one of said first carrying assembly (38) and a second carrying assembly (40) being connected to said carrying device base (42),
each one of first carrying assembly (38) and said second carrying assembly (40) being in accordance with the following:
said carrying assembly comprising a delimitation assembly (44) and a supporting surface assembly (46) connected to the delimitation assembly (44), said supporting surface assembly (46) comprising at least one supporting surface (48, 50, 52, 54), wherein said vertical direction (V) extends from said supporting surface assembly (46) to said carrying device base (42) when said carrying device (28) assumes said carrying configuration;
wherein, when said carrying device (28) assumes said carrying configuration and said carrying device (28) carries said stack of products (12), said delimitation assembly (44) of said first carrying assembly (38) and said delimitation assembly (56) of said second carrying assembly (40) are adapted to be located on opposite sides of said stack of products (12) in the transversal direction (T);
each supporting surface (48, 50, 52, 54) of said supporting surface assembly (46) being adapted to contact and support said stack of products (12) such that said stack of products (12) is located between said supporting surface (48, 50, 52, 54) and at least a portion of said carrying device base (42), in said vertical direction (V), when said carrying device (28) assumes said carrying configuration and said carrying device (28) carries said stack of products (12),
said supporting surface assembly (46) extending in said longitudinal direction (L) and comprising a longitudinal supporting surface assembly centre portion (58), a longitudinal supporting surface assembly first end portion (60) and a longitudinal supporting surface assembly second end portion (62),
said longitudinal supporting surface assembly first end portion (60) and said longitudinal supporting surface assembly second end (62) portion being located on opposite sides of said longitudinal supporting surface assembly centre portion (58) in said longitudinal direction (L),
said carrying device (28) being such that when said carrying device (28) assumes said carrying configuration:
- said longitudinal supporting surface assembly centre portion (58) is located at a longitudinal supporting surface assembly centre portion distance (64) from said carrying device base (42) in the vertical direction (V);
- said longitudinal supporting surface assembly first end portion (60) is located at a longitudinal supporting surface assembly first end portion distance (66) from said carrying device base (42) in the vertical direction (V), and
- said longitudinal supporting surface assembly second end portion (62) is located at a longitudinal supporting surface assembly second end portion distance (68) from said carrying device base (42) in the vertical direction (V),
**characterized in that**:
said longitudinal supporting surface assembly centre portion distance (64) is either greater than or smaller than each one of said longitudinal supporting surface assembly first end portion distance (66) and said longitudinal supporting surface assembly second end portion distance (68).

2. The carrying device (28) according to claim 1, wherein said longitudinal supporting surface assembly first end portion (60) is located at a supporting surface assembly longitudinal distance (74), in said longitudinal direction (L), from said longitudinal supporting surface assembly second end portion (62), a supporting surface assembly vertical distance (76) associated with said supporting surface assembly (46) being the smallest absolute value difference of a first difference (78) between said longitudinal supporting surface assembly first end portion distance (66) and said longitudinal supporting surface assembly centre portion distance (64) and a second difference (80) between said longitudinal supporting surface assembly second end portion distance (68) and said longitudinal supporting surface assembly centre portion distance (64), a ratio between said supporting surface assembly vertical distance and said supporting surface assembly longitudinal distance (74) being at least 1%, preferably at least 2%, more preferred at least 3%, preferably said supporting surface assembly vertical distance is at least 2 mm, preferably at least 3 mm.

3. The carrying device (28) according to any one of the preceding claims, wherein said carrying assembly comprises a set of supporting teeth, each tooth (82, 84, 86, 88) of said set of supporting teeth comprising a supporting surface (48, 50, 52, 54) forming part of said supporting surface assembly (46), preferably said set of supporting teeth comprises three or more teeth (82, 84, 86, 88).

4. The carrying device (28) according to any one of the preceding claims, wherein said carrying device (28) is adapted to assume a picking configuration in which said carrying device (28) is adapted to pick said stack of products (12), a smallest distance in said transversal direction (T) between a portion of said supporting surface assembly (46) of said first carrying assembly (38) and a portion of said supporting surface assembly (94) of said second carrying assembly (40) is a picking transversal distance (92), when said carrying device (28) assumes said carrying configuration, a smallest distance in said transversal direction (T) between said portion of said supporting surface assembly (46) of said first carrying assembly (38) and said portion of said supporting surface assembly (94) of said second carrying assembly (40) is a carrying transversal distance (96), said carrying transversal distance (96) being smaller than said picking transversal distance (92), preferably a difference between said picking transversal distance (92) and said carrying transversal distance (96) is at least 5 mm.

5. The carrying device (28) according to claim 4, wherein said supporting surface assembly (46) is displaceable, preferably linearly displaceable, in said transversal direction (T) relative to said delimitation assembly (44) in order to obtain said carrying configuration and said picking configuration, respectively, and/or where said supporting surface assembly (46) is pivotable around a pivot axis (98), extending in said longitudinal direction (L), relative to said delimitation assembly (44) in order to obtain said carrying configuration and said picking configuration, respectively.

6. The carrying device (28) according to any one of claims 4 to 5, wherein said supporting surface assembly (46) comprises a supporting surface assembly shaft assembly (102) comprising at least one supporting surface assembly shaft (104, 106), said delimitation assembly (44) comprising a guide groove (108) adapted to guide each supporting surface assembly shaft (104, 106) of said supporting surface assembly shaft assembly (102), said supporting surface assembly shaft assembly (102) and said guide groove (108) being such that when said supporting surface assembly shaft assembly (102) is displaced relative to said guide groove (108), said supporting surface assembly (46) can be displaced in said transversal direction (T) and also pivoted around a pivot axis, extending in said longitudinal direction (L), relative to said delimitation assembly (44).

7. The carrying device (28) according to any one of claims 4 to 6, wherein said delimitation assembly (44) is displaceable, preferably linearly displaceable, in said transversal direction (T) relative to said carrying device base (42) in order to obtain said carrying configuration and said picking configuration, respectively.

8. The carrying device (28) according to any one of claims 4 to 7, wherein said delimitation assembly (44) is pivotable around a pivot axis (100), extending in said longitudinal direction (L), relative to said carrying device base (42) in order to obtain said carrying configuration and said picking configuration, respectively.

9. A transferring device (18) for transferring a stack of products (12), in particular a stack of sheets, such as a stack of sheets of paper, from a first position (24) to a second position (26), said transferring device (18) comprising a carrying device (28) according to any one of the preceding claims and a carrying device mover (30) adapted to move said carrying device (28), preferably said carrying device mover (30) being adapted to move said carrying device (28) in each one of said longitudinal direction (L), said transversal direction (T) and said vertical direction (V), preferably said carrying device mover (30) comprises, or is constituted by, a robot, preferably said robot comprising a robotic arm (32) comprising a robotic arm end (34), said carrying device (28) being disposed on said robotic arm end (34).

10. A handling system (136) for handling a stack of products (12), in particular a stack of sheets, such as a stack of sheets of paper, said handling system (136) comprising a picking station (24) and a carrying device (28) according to any one of claims 1 - 8 or a transferring device (18) according to claim 9, said carrying device (28) being adapted to carry a stack of products (12) from said picking station (24).

11. The handling system (136) according to claim 10, wherein said picking station (24) comprises a picking station supporting surface assembly (138), comprising at least one picking station supporting surface, adapted to support said stack of products (12) and from which said carrying device (28) is adapted to pick said stack of products (12), said picking station (24) extending in a picking station longitudinal direction (Lₚ), a picking station transversal direction (Tₚ) and a picking station vertical direction (Vₚ), said picking station directions (Lₚ, Tₚ, Vₚ) being mutually perpendicular, when said carrying device (28) assumes said picking configuration for picking said stack of products (12) from said picking station supporting surface assembly (138), said picking station longitudinal direction (Lₚ) is parallel to said longitudinal direction (L) of said carrying device (28), wherein, as seen in said picking station longitudinal direction (Lₚ), said picking station supporting surface assembly (138) comprises a picking station supporting surface assembly centre portion (140), a picking station supporting surface assembly first end portion (142) and a picking station supporting surface assembly second end portion (144), said picking station supporting surface assembly first end portion (142) and said picking station supporting surface assembly second end portion (144) being located on opposite sides of said picking station supporting surface assembly centre portion (140) in the picking station longitudinal direction (Lₚ), wherein, in said picking station vertical direction (Vₚ), said picking station supporting surface assembly centre portion (140) has a picking station supporting surface assembly centre portion elevation (146); said picking station supporting surface assembly first end portion (142) has a picking station supporting surface assembly first end portion elevation (148), and said picking station supporting surface assembly second end portion (144) has a picking station supporting surface assembly second end portion elevation (150), said picking station supporting surface assembly centre portion elevation (146) being either smaller than or greater than each one of said picking station supporting surface assembly first end portion elevation (148) and said picking station supporting surface assembly second end portion elevation (150), preferably said picking station supporting surface assembly first end portion (142) is located at a picking station longitudinal distance (156), in said picking station longitudinal direction (Lₚ), from said picking station supporting surface assembly second end portion (144), a picking station supporting surface assembly vertical distance (158) associated with said picking supporting surface (138) being the smallest absolute value difference between a first picking station difference (160) between said picking station supporting surface assembly centre portion elevation (146) and said picking station supporting surface assembly first end portion elevation (148) and a second picking station distance (162) between said picking station supporting surface assembly centre portion elevation (146) and said picking station supporting surface assembly second end portion elevation (150), a ratio between said picking station supporting surface assembly vertical distance (158) and said picking supporting surface assembly longitudinal distance (156) being at least 1%, preferably at least 2%, more preferred at least 3%, preferably said picking station supporting surface assembly vertical distance (158) is at least 2 mm, preferably at least 3 mm.

12. The handling system (136) according to claim 11, wherein said carrying device (28) is such that said longitudinal supporting surface assembly centre portion distance (64) is smaller than each one of said longitudinal supporting surface assembly first end portion distance (66) and said longitudinal supporting surface assembly second end portion distance (68) and wherein said picking station (24) is such that said picking station supporting surface assembly centre portion elevation (146) is greater than each one of said picking station supporting surface assembly first end portion elevation (148) and said picking station supporting surface assembly second end portion elevation (150), alternatively wherein said carrying device (28) is such that said longitudinal supporting surface assembly centre portion distance (64) is greater than each one of said longitudinal supporting surface assembly first end portion distance (66) and said longitudinal supporting surface assembly second end portion distance (68) and wherein said picking station (24) is such that said picking station supporting surface assembly centre portion elevation (146) is smaller than each one of said picking station supporting surface assembly first end portion elevation (148) and said picking station supporting surface assembly second end portion elevation (150).

13. A use of a carrying device (28) according to any one of claims 1 - 8 for carrying a stack of products (12), in particular a stack of sheets, such as a stack of sheets of paper.

14. A use of a transferring device (18) according to claim 9 for transferring a stack of products (12), in particular a stack of sheets, such as a stack of sheets of paper, from a first position (24) to a second position (26).

15. A use of a handling system (136) according to any one of claims 10 - 12 for handling a stack of products (12), in particular a stack of sheets, such as a stack of sheets of paper.
